# EUROPEAN PATENT APPLICATION

(11) **EP 1 410 863 A1**
(43) Date of publication of application: **21.04.2004**
(21) Application number: 03256465.0
(22) Date of filing: 14.10.2003
(51) Int. Cl.: B23B 31/02

(54) **A micro-adjustable tool chuck**

(30) Priority: 17.10.2002 GB 0224120; 09.01.2003 GB 0300425
(71) Applicant: Coincheck Electronics Limited, Beverley, East Yorkshire HU17 0HQ (GB)
(72) Inventor: Stenson, Bernard Neil, Hull, East Yorkshire HU5 4BL (GB)
(74) Representative: W.P. THOMPSON & CO.

(57) **Abstract**

A micro-adjustable tool chuck comprises a first cylindrical body member (1) adapted for connection to a drive spindle, a second cylindrical body member (2) adapted to receive a tool bit in the end thereof, and moveable axially relative to the first body member (1), and means (8) for drivingly connecting the first body member (1) to the second body member (2). A first screw thread (10) is formed on the outer surface of the first body member (1) and a second screw thread (11) is formed on the outer surface of the second body member (2). The first screw thread (10) is of a greater pitch (coarser) than the second screw thread (11). An outer sleeve (12) is provided around the first and second body members (1,2), which outer sleeve (12) defines a third screw thread (13) on the inner surface thereof at one end which engages with the said first screw thread (10) on the first body member (1) and a fourth screw thread (14) on the inner surface thereof at the opposite end which engages with the second screw thread (11) on the second body member (2) such that rotation of the outer sleeve (12) in one direction causes the first and second body members (1,2) to move axially towards each other and rotation of the outer sleeve (12) in the opposite direction causes the first and second body members (1,2) to move axially away from each other.

## Description

The present invention relates to multi-spindle CNC machines and more specifically to a tool chuck for use therewith.

Multi-spindle CNC machines are known for forming complex cutting, drilling and routing actions in accordance with a predetermined programme on two or more work pieces simultaneously. To this end each spindle has associated with it a magazine of tool bits for carrying out each of the various actions. Each tool bit is mounted in a tool chuck which is adapted to operatively engage with the spindle. In use, each magazine is moveable relative to its associated spindle to allow a used tool bit to be returned to the magazine and a new tool bit to be picked up. The spindles are normally mounted on the same moving carriage with a single control mechanism effecting movement thereof in the Z-axis of the machine, which is to say in the direction extending perpendicular to the surface of the work pieces. It will be understood that this does not allow independent adjustment of the relative position of the end of each spindle and hence, of the end of a tool bit carried thereby. However, to ensure that the actions effected on each work piece are dimensionally accurate it is essential that all the tool bits are set so that the ends thereof have the same relative axial location.

A conventional tool chuck of the type used in a multi-spindle CNC machine comprises a main body with a tool holding collett at one end and a normally tapered spigot at the other end which serves to rigidly locate and secure the tool chuck on the end of a spindle. The tool bit is received in a bore in the collett and is secured in place therein by tightening a securing nut.

In use, the tool bit is usually inserted fully into the bore in the collett so that the inner end thereof is positively "bottomed" against the main body of the tool chuck. It may be assumed that this allows the relative position of the end of each tool bit to be accurately set. Unfortunately, this cannot be relied upon. Tool bits vary in length from one to the other due, for example, to differences in manufacture and the variable effects of wear and tear. Moreover, even when the tool bit is fully inserted into the bore, tightening of the securing nut has the effect of pushing the collett into the main body, thus causing the axial position of the collett and hence of the tool bit mounted in it to change. This effectively prevents the axial position of the tool bit from being set prior to clamping.

It is known to use measuring devices to set the axial position of a tool bit in a tool chuck, but even this is not entirely satisfactory. At best these devices only allow trial and error adjustment of the tool bit - unclamping, followed by movement approximating the amount of adjustment required, and then re-clamping.

It is an object of the present invention to provide a micro-adjustable tool chuck for use in a multi-spindle CNC machine which allows the axial position of a tool bit secured therein to be adjusted and set accurately, thereby overcoming or at least substantially obviating the problems and disadvantages associated with conventional tool chucks.

According to the present invention there is provided a micro-adjustable tool chuck comprising a first cylindrical body member adapted for connection to a drive spindle, a second cylindrical body member adapted to receive a tool bit in the bottom end thereof and moveable axially relative to the first body member, and means for drivingly connecting the first body member to the second body member, wherein a first screw thread is formed on the outer surface of the first body member, a second screw thread is formed on the outer surface of the second body member, the first screw thread being of a greater pitch (coarser) than the second screw thread and an outer sleeve provided around the first and second body members defining a third screw thread on the inner surface thereof at one end which engages with the said first screw thread on the first body member and a fourth screw thread on the inner surface thereof at the opposite end which engages with the second screw thread on the second body member such that rotation of the sleeve in one direction causes the first and second body members to move axially towards each other and rotation of the sleeve in the opposite direction causes the first and second body members to move axially away from each other.

In a preferred embodiment of the present invention the first and second body members are drivingly connected together by means of a splined or keyed spigot which is received in a splined or keyed bore. The splined or keyed spigot is able to slide axially in and out of the splined or keyed bore, thus enabling the first and second body parts to move towards and away from each other, but preventing them from rotating relative to each other.

Conveniently, the first body member comprises a tapered spigot at the upper end thereof which is adapted to drivingly connect the tool chuck to a drive spindle.

Conveniently, the second body member comprises a collett in the bottom thereof having a bore therein in which a tool bit is received and a nut for tightening the collett to secure the tool bit therein.

Preferably, the tool chuck further comprises locking means for preventing rotation of the outer sleeve relative to the first and second body members and thereby preventing axial movement of the first and second body members relative to one another. Conveniently, the locking means comprises one or more ball bearings each of which is retained in a hole in the outer sleeve and is selectively engageable in a respective axially extending groove in the outer surface of the first or second body member. Preferably, each ball bearing is retained in its respective hole in the outer sleeve by a retaining sleeve which is moveable relative to the outer sleeve and has a groove or slot on the inner surface thereof which when aligned with the hole in the outer sleeve allows the ball bearing to disengage from the groove in the outer surface of the first or second body member.

In use, rotation of the outer sleeve will cause it to move axially along the thread of the first body member by a distance equivalent to the angular displacement of the sleeve and the pitch of the thread. It will also move axially along the thread of the second body member again by a distance equivalent to the angular displacement of the sleeve (which will be the same as previously) and the pitch of the thread (which is less than that of the thread of the upper body member). Owing to the pitch of the thread on the first body member being greater than that on the second body member, the outer sleeve will travel axially along the first body member a greater distance than it does along the second body member. Consequently, the second body member will be displaced axially relative to the first body member by the difference in travel of the outer sleeve over the outer threads of the first and second body members. By appropriate selection of the pitches of the threads on the first and second body members it is possible to achieve very fine adjustment of the axial position of the second body member, and hence of a tool bit secured therein, relative to the first body member. In a multi-spindle CNC machine this enables all of the tool bits to be set so that they all have the same axial position. This is important to ensure that items cut on head 1 are the same as items cut on head 2 - onwards.

Preferably, the angular distance between each of the said grooves or slots in the outer surface of the first or second body members represents a predetermined axial displacement of the second body member, and of the end of a tool bit secured therein, relative to the first body member. In a preferred embodiment of the invention there are five equi-angularly spaced grooves or slots in the outer surface of the first or second body member and the distance between each of these represents a tool axial displacement of 0.1mm. By quantitively relating the distance travelled by the second body member to the spacing between the grooves it is quite easy for the user to adjust and set the chuck.

An embodiment of the present invention will now be described, by way of example, with reference to the accompanying drawings, in which:
Fig 1 shows a sectional view through a micro-adjustable tool chuck according to the present invention with the outer sleeve locked against rotational movement, thereby preventing relative axial movement of the upper and lower body members; and
Fig 2 shows a sectional view of the tool chuck shown in Fig 1 in which the upper and lower body members are free to move axially relative to one another, thereby facilitating adjustment of the axial position of a tool bit secured in the lower body member.

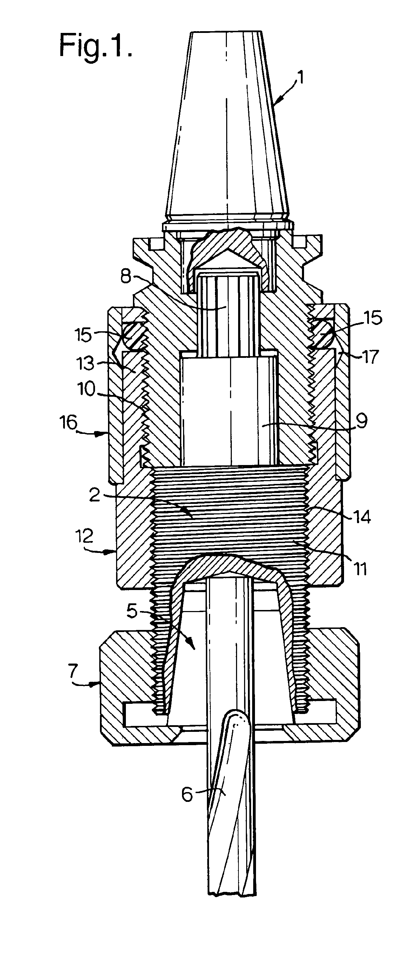

Referring to Fig 1 of the drawings there is shown a tool chuck suitable for use in a multi-spindle CNC machine. The tool chuck comprises a cylindrical upper member 1 and a cylindrical lower member 2. The upper member 1 has tapered spigot at the upper end thereof which facilitates connection to a drive spindle of the CNC machine. An open ended cylindrical cavity and an internally splined bore are formed in the lower end of the upper member 1. The lower member 2 has a tapered bore formed in the lower end thereof in which is received a collett 5 having a bore therein in which is received a tool bit 6. A nut 7 is provided on the lower end of the lower member 2 for tightening the collett 5 to secure the tool bit 6 therein. The upper end of the lower member comprises an externally splined spigot 8 which is adapted to be received in the internally splined bore and an intermediate cylindrical section 9 which is received in the cylindrical cavity. The splined spigot 8 is able to slide axially in and out of the splined bore, thus enabling the upper and lower members 1 and 2 to move towards and away from each other, whilst still maintaining a driveable connection between them.

Both the upper member 1 and the lower member 2 are externally threaded, the thread 10 on the upper member 1 being courser or of a greater pitch than the thread 11 on the lower member 2. An outer sleeve 12 links the upper and lower members 1 and 2. This outer sleeve 12 has an internally threaded section 13 at one end which matches the thread 10 on the upper member 1. It also has an internally threaded section 14 at the other end which matches the thread on the lower member 2.

In use, rotation of the outer sleeve 12 causes it to move axially along the thread 10 of the upper member 1 by a distance equivalent to the angular displacement of the sleeve 12 and the pitch of the thread 10. It also causes the outer sleeve 12 to move axially along the thread 11 of the lower member 2, again by a distance equivalent to the angular displacement of the sleeve 12 (which will be the same as previously) and the pitch of the thread 11 (which is less than the thread 10 of the upper member 1). Owing to the pitch of the thread 10 being greater than that of the thread 12, the outer sleeve 12 is caused to travel axially along the upper member 1 a greater distance than it does along the lower member 2. Consequently, the lower member 2 is caused to be displaced axially relative to the upper member 1 by the difference in travel of the outer sleeve 12 over the outer threads 10 and 11. By appropriate selection of the pitches of the threads 10 and 11 it is possible to achieve very fine adjustment of the axial position of the lower member 2, and hence of the tool bit 6 secured therein, relative to the upper member 1. In a multi-spindle CNC machine this enables all of the tool bits to be set so that they all have the same axial position.

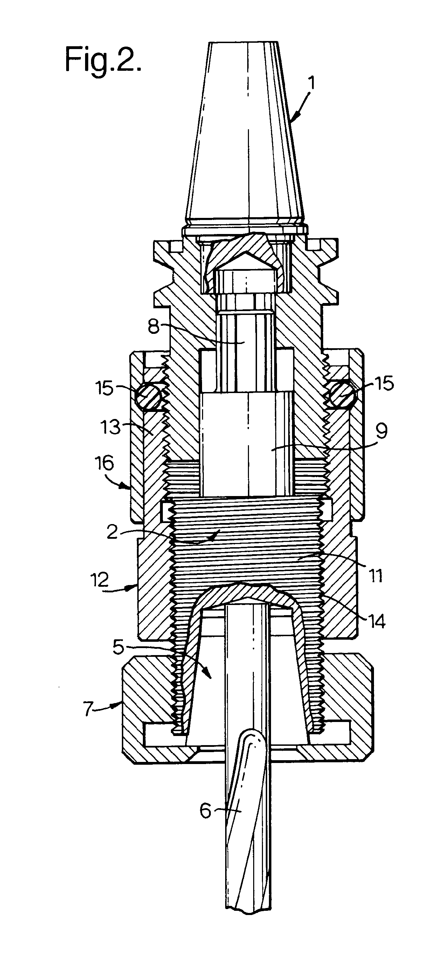

In order to prevent the outer sleeve 12 from slipping once the relative axial positions of the upper and lower members 1 and 2 have been set, the tool chuck further comprises a locking mechanism. This is best understood by referring to Figs 1 and 2 together. The locking mechanism consists of two ball bearings 15, each of which is located in a respective hole in the outer sleeve 12 and retained therein by a retaining sleeve 16 which is axially slidable over the outer sleeve 12 between two positions. A circumferentially extending groove or slot 17 is formed on the internal surface of the retaining sleeve 16. In the first position shown in Fig 1 the groove 17 lies beyond the holes in the outer sleeve 12 in which the ball bearings 15 are located. As a consequence the ball bearings 15 are forced into engagement with axially extending grooves (not visible) in the outer surface of the upper member 1. The positioning of the ball bearings 15 between the outer sleeve 12 and upper member 1 causes these two components to be locked together, thereby preventing rotation of the outer sleeve 12 about the upper member 1. In the second position shown in Fig 2 the circumferentially extending groove 17 is aligned with the holes in the outer sleeve 12, thereby allowing the ball bearings 15 to drop out of engagement with the grooves in the outer surface of the upper member 1 and enabling the outer sleeve 12 to rotate freely about the upper member 1.

## Claims

1. A micro-adjustable tool chuck comprising a first cylindrical body member (1) adapted for connection to a drive spindle, a second cylindrical body member (2) adapted to receive a tool bit in the end thereof and moveable axially relative to the first body member (1), and means (8) for drivingly connecting the first body member (1) to the second body member (2), wherein a first screw thread (10) is formed on the outer surface of the first body member (1), a second screw thread (11) is formed on the outer surface of the second body member (2), the first screw thread (10) being of a greater pitch (coarser) than the second screw thread (11) and wherein an outer sleeve (12) is provided around the first and second body members (1,2), the outer sleeve (12) defining a third screw thread (13) on the inner surface thereof at one end which engages with the said first screw thread (10) and a fourth screw thread (14) on the inner surface thereof at the opposite end which engages with the second screw thread (11) such that rotation of the outer sleeve (12) in one direction causes the first and second body members (1,2) to move axially towards each other and rotation of the outer sleeve (12) in the opposite direction causes the first and second body members (1,2) to move axially away from each other.

2. A micro-adjustable tool chuck according to claim 1, wherein the first and second body members (1,2) are drivingly connected together by means of a splined or keyed spigot (8) which is received in a splined or keyed bore and which is able to slide axially in the splined or keyed bore.

3. A micro-adjustable tool chuck according to claim 1 or 2, wherein the first body member (1) comprises a tapered spigot at the upper end thereof which is adapted to drivingly connect the tool chuck to a drive spindle.

4. A micro-adjustable tool chuck according to claim 1, 2 or 3, wherein the second body member (2) comprises a collett (5) in the bottom thereof having a bore therein in which a tool bit is received and a nut (7) for tightening the collett (5) to secure the tool bit therein.

5. A micro-adjustable tool chuck according to claim 1, 2, 3 or 4, further comprising locking means (15,16) for preventing rotation of the outer sleeve (12) relative to the first and second body members (1,2) and thereby preventing axial movement of the first and second body members (1,2) relative to one another.

6. A micro-adjustable tool chuck according to claim 5, wherein the locking means comprises one or more ball bearings (15) each of which is retained in a respective hole in the outer sleeve (12) and each of which is selectively engageable in a respective axially extending groove in the outer surface of the first or second body member (1,2).

7. A micro-adjustable tool chuck according to claim 6, wherein each ball bearing is retained in its respective hole in the outer sleeve (12) by a retaining sleeve (16) which is moveable relative to the outer sleeve (12), and which has a groove or slot (17) on the inner surface thereof which when aligned with the hole in the outer sleeve (12) allows the ball bearing (15) therein to disengage from the groove in the outer surface of the first or second body member (1,2).

8. A micro-adjustable tool chuck according to claim 6 or 7, wherein the angular distance between each of the axially extending grooves or slots in the outer surface of the first or second body members (1,2) represents a predetermined axial displacement of the second body member (2), and of the end of a tool bit secured therein, relative to the first body member (1).

9. A micro-adjustable tool chuck according to claim 8, wherein there a five equi-angularly spaced axially extending grooves or slots in the outer surface of the first or second body members (1,2) and the distance between each of these represents a tool axial displacement of 0.1mm.

10. A multi-spindle CNC machine comprising for each spindle a magazine of tool bits, wherein each tool bit is mounted in a tool chuck which is adapted to operatively engage with a spindle and wherein one or more of the tool chucks comprises a micro-adjustable tool chuck in accordance with any one of claims 1 to 9.
